Europäisches Patentamt

European Patent Office

Office européen des brevets

(19)

(11) Veröffentlichungsnummer: **0 321 590 B1**

(12) # EUROPÄISCHE PATENTSCHRIFT

(45) Veröffentlichungstag der Patentschrift: **24.04.91**

(21) Anmeldenummer: **87117730.9**

(22) Anmeldetag: **01.12.87**

(51) Int. Cl.⁵: **B23P 15/40**, B23P 9/04,
   //B21J7/00,B23D79/02

(54) **Verfahren und Vorrichtung zum Herstellen eines eine scharfe Schneidkante aufweisenden Stanzwerkzeugs.**

(43) Veröffentlichungstag der Anmeldung:
   **28.06.89 Patentblatt 89/26**

(45) Bekanntmachung des Hinweises auf die
   Patenterteilung:
   **24.04.91 Patentblatt 91/17**

(84) Benannte Vertragsstaaten:
   **AT BE CH DE ES FR GB GR IT LI LU NL SE**

(56) Entgegenhaltungen:
   **DE-A- 1 802 322    DE-C- 1 502 775
   FR-A- 1 160 456    US-A- 1 523 356
   US-A- 1 560 861    US-A- 3 707 087**

(73) Patentinhaber: **Kocher & Beck OHG Gravieranstalt und Rotationsstanzenbau
   Max-Eyth-Strasse 14
   W-7022 Leinfelden-Echterdingen 2(DE)**

(72) Erfinder: **Beck, Rolf
   Örlesweg 34
   W-7022 Leinfelden-Echterdingen 1(DE)**

(74) Vertreter: **Freiherr von Schorlemer, Reinfried,
   Dipl.-Phys.
   Patentanwalt Brüder-Grimm-Platz 4
   W-3500 Kassel(DE)**

## Beschreibung

Die Erfindung betrifft ein Verfahren und eine Vorrichtung der in den Oberbegriffen der Ansprüche 1, 4 und 10 definierten Gattung.

Zum Durchschneiden von weichen Materialien, z.B. Papieren, Kunststoff-Folien, Textilien, flexiblen Leiterplatten, Etiketten od. dgl., werden überwiegend Stanzvorrichtungen benutzt, die Stanzwerkzeuge mit scharfen Schneidkanten aufweisen. Die Stanzwerkzeuge können z.B. aus Platten, Zylindern oder auf Zylindern aufgespannten, flexiblen Blechen bestehen, von denen die Schneidkanten in Form von geschärften Graten erhaben vorstehen.

Die Schneidkanten sollten auf dem gesamten Stanzwerkzeug eine einheitliche Höhe aufweisen. Bei der Herstellung und weiteren Verarbeitung von Selbstklebe- oder Haftetiketten beispielsweise besteht das Ausgangsmaterial aus einem mit einer Klebschicht versehenen Etikettenpapier und einem an der Klebschicht anliegenden Trägerband zum Schutz der Klebschicht. Das Stanzwerkzeug hat die Aufgabe, derart auf das Ausgangsmaterial einzuwirken, daß das Etikettenpapier entsprechend der gewünschten Kontur der Etiketten vollständig durchgeschnitten wird, das Trägerband jedoch praktisch ungeschnitten bleibt. Ist diese Forderung nicht erfüllt, ergeben sich Störungen bei der automatischen Fertigstellung der Etiketten, wenn das durch den Stanzvorgang entstehende, die Etiketten umrahmende Gitter vom Trägerband abgezogen wird, oder während der Weiterverarbeitung der Etiketten in einer automatisierten Fertigungs anlage, z.B. einer Verpackungsmaschine oder einer Kuvertier- und Adressieranlage, wenn die Etiketten selbst vom Trägerband abgelöst werden, um sie auf einen Gegenstand aufzubringen. Wird das Etikettenpapier beim Stanzvorgang nicht überall sauber durchgeschniten, zieht das Gitter die Etiketten mit, was eine Störung und ggf. einen längeren Stillstand der gesamten Fertigungsanlage zur Folge hat. Ähnliche Nachteile ergeben sich, wenn beim Stanzvorgang nicht nur das Etikettenpapier, sondern auch das Trägerband ganz oder teilweise durchgeschnitten wird, da in diesem Fall die Etiketten nicht korrekt abgelöst werden können, ohne Teile des Trägerbands mitzuziehen. Da das Etikettenpapier häufig eine Stärke von z.B. nur 0,1 mm, das Trägerband eine Stärke von nur 0,05 mm aufweist, sollten für die Höhe der Schneidkanten des Stanzwerkzeugs Toleranzen von wenigen hundertstel Millimeter bis herab zu weniger als einem hundertstel Millimeter eingehalten werden. Entsprechend hohe Toleranzen sind erwünscht, wenn Papierbahnen ohne schützendes Trägerband vorliegen und beispielsweise ein Fenster in ein Briefkuvert zu stanzen ist, damit die beim Stanzvorgang verwendete und z.B. aus Gummi oder Stahl bestehende Unterlage für die Papierbahn weder zerstört wird noch zur Folge haben kann, daß die Schneidkanten schnell stumpf werden.

Bei einem bekannten Verfahren der eingangs bezeichneten Gattung werden die Grate in einem ersten Verfahrensschritt beispielsweise dadurch ausgebildet, daß die sie umgebenden Bereiche durch Erodieren oder Ätzen entfernt werden. Alternativ wäre es möglich, hierfür bekannte, beispielsweise bei der Basierklingenherstellung angewendete Vorrichtungen vorzusehen (DE-PS 1 502 775), die mit kreisringförmigen Stirnschneiden versehene Schneidwerkzeuge aufweisen, doch wäre dies wenig sinnvoll, da bei der Herstellung der Stanzwerkzeuge in der Regel von flachen Blechen ausgegangen wird und die Anwendung von Schneidwerkzeugen bereits das Vorhandensein der Grate voraussetzt. Danach werden die Grate m einem zweiten Verfahrensschritt durch manuelle, mechanische Bearbeitung mit ausreichend scharfen Schneidkanten versehen, weil mit den bisher bekannten Ätzverfahren allein weder die erwünschten schmalen Schneidkanten von ca. 0,01 mm und weniger hergestellt noch die erforderlichen kleinen Höhentoleranzen garantiert werden können. Die im zweiten Verfahrensschritt angewendete Bearbeitungsmethode besteht überwiegend darin, die Grate mit einer scharfen Kante eines Gravierstichels od. dgl. manuell von wenigstens einer Seite her unter der Lupe abzuschaben, was nicht nur eine zeitraubende, anstrengende Tätigkeit ist und gut ausgebildete Arbeitskräfte erfordert, sondern auch leicht zu Fehlern führt, die zum Ausschuß eines gesamten Stanzwerkzeugs führen können. Das seitliche Bearbeiten setzt außerdem voraus, daß bereits der ursprüngliche Stanzkörper, aus dem das Stanzwerkzeug hergestellt wird, engen Toleranzen unterliegt, so daß nur qualitativ hochwertige Materialien für diesen Zweck verwendet werden dürfen. Dies führt insgesamt zu langen Lieferfristen bei der Anlieferung der Stanzkörper und/oder bei der Herstellung der Stanzwerkzeuge, was insbesondere für die Besteller und Benutzer der Stanzwerkzeuge unerträglich ist, die sich den von ihren Kunden gewünschten Etikettenformen od. dgl. schnell und zu vertretbaren Peisen anpassen wollen und müssen.

Der Erfindung liegt die Aufgabe zugrunde, ein Verfahren und eine Vorrichtung vorzuschlagen, mittels derer die manuelle Fertigbearbeitung eines durch Ätzen oder auf andere Weise hergestellten Grates eines Stanzwerkzeugs halbautomatisch durchgeführt werden kann. Die Erfindung soll außerdem ermöglichen, daß die Höhentoleranzen bei der Herstellung der Grate im ersten Verfahrensschritt weniger kritisch als bisher sind und daß auch Dickentoleranzen der Stanzkörper noch teilweise ausgeglichen werden können.

Zur Lösung dieser Aufgabe dienen die kennzeichnenden Merkmale der Ansprüche 1, 4 und 10.

Weitere vorteilhafte Merkmale der Erfindung ergeben sich aus den Unteransprüchen.

Die Erfindung beruht auf der überraschenden Erkenntnis, daß ein zum Stanzen dünner Papierbahnen oder Kunststoff-Folien unbrauch-barer Grat durch einen Hämmer- und/oder schabvorgang mit einer sehr scharfen Schneidkante versehen werden kann, die in engen Toleranzen eine definierte und konstante Höhe aufweist. Da der Hämmer- bzw. Schabvorgang halbautomatisch und mit hoher Frequenz bzw. Geschwindigkeit durchgeführt werden kann, sind die Herstellungszeiten für die Stanzwerkzeuge beträchtlich kleiner als bisher. Vorteilhaft ist bei Anwendung des Hämmervorgangs ferner, daß die bei der Umformung der Gratspitze zu einer Schneidkante stattfindende Verfestigung des Werkstoffs ermöglicht, anstelle der qualitativ hochwertigen Metalle, die bisher aus Gründen hoher Standzeiten für die Stanzkörper verwendet wurden, solche von geringerer Qualität einzusetzen. Vor allem aber hängen die Höhentoleranzen der Schneidkanten vorwiegend von den Toleranzen beim Hämmer- bzw. Schabvorgang ab, die sehr klein gehalten werden können, so daß an die Stanzkörper vor allem hinsichtlich ihrer Dickentoleranzen geringere Anforderungen gestellt werden können, wodurch die Lieferzeiten für diese verkürzt werden. Schließlich ergibt sich der Vorteil, daß die Fertigbearbeitung der Grate nicht länger eine anstrengende, monotone und nur mit großer Konzentration ausführbare Tätigkeit ist, weil die manuelle Tätigkeit im wesentlichen auf das Vorschieben des Stanzkörpers beim Hämmer- bzw. Schabvorgang und die Kontrolle der hergestellten Schneidkanten reduziert wird.

Die Erfindung wird nachfolgend in Verbindung mit der beiliegenden Zeichnung an einem Ausführungsbeispiel näher erläutert. Es zeigen:

Fig. 1 eine erfindungsgemäße Vorrichtung in Perspektivischer und teilweise weggebrochener Darstellung bei der Schärfung eines geradlinigen Grates;

Fig. 2 einen Ausschnitt der Vorrichtung nach Fig. 1 bei der Schärfung eines kurvenförmigen Grates;

Fig. 3 eine Vorderansicht eines erfindungsgemäßen Hämmerwerkzeugs;

Fig. 4 einen Schnitt längs der Linie IV-IV der Fig. 3;

Fig. 5a bis 5d eine schematische und teilweise geschnittene Darstellung der Umwandlung eines Grates in eine Schneidkante durch den erfindungsgemäßen Hämmervorgang;

Fig. 6 schematisch eine Draufsicht auf ein Muster von gestanzten Haft-Etiketten;

Fig. 7 und 8 den Fig. 3 und 4 entsprechende Ansichten eines kombinierten Hämmer- und Schab-Werkzeugs; und

Fig. 9 und 10 schematisch die Anwendung des Werkzeugs nach Fig. 7 und 8 zum Herstellen eines eine scharfe Schneidkante aufweisenden Stanzwerkzeugs.

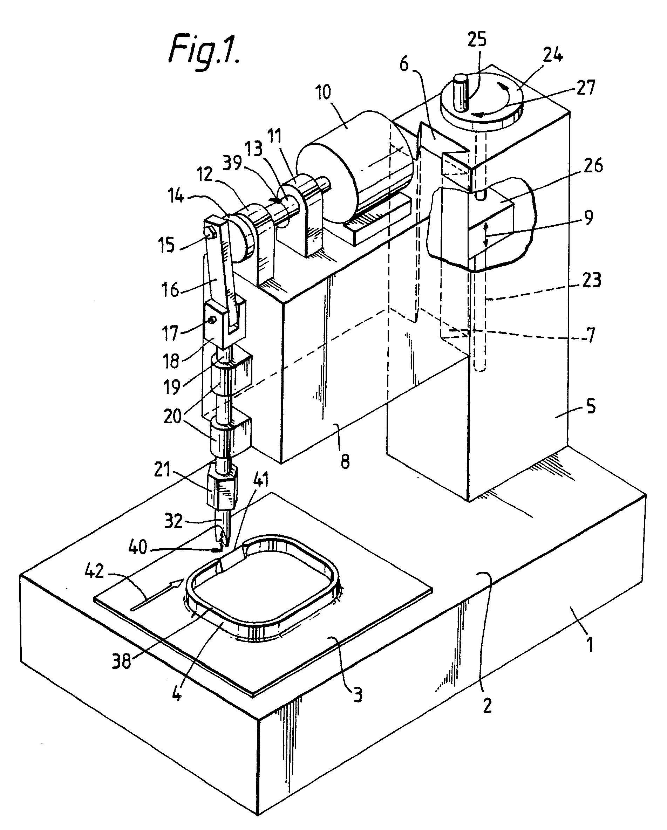

Die Vorrichtung nach Fig. 1 enthält einen Arbeitstisch 1 mit einer Auflage in Form einer horizontalen Arbeitsplatte 2 zum Auflegen eines Stanzkörpers 3 mit ebener Unterseite, der bereits in einem ersten Verfahrensschritt mit einem erhaben vorstehenden Grat 4 versehen worden ist, der nach dem Auflegen des Stanzkörpers 3 auf die Arbeitsplatte 2 im wesentlichen senkrecht nach oben ragt. An einem Ende des Arbeitstisches 1 ist ein vertikaler Ständer 5 vorgesehen, der an einer der Arbeitsplatte 2 zugewandten Seite mit einer Schwalbenschwanz-Führung 6 versehen ist. In dieser Führung 6 ist mit Gleitsitz ein entsprechend schwalbenschwanzförmiger Führungskörper 7 eines seitlich über die Arbeitsplatte 2 ragenden Tragarms 8 angeordnet, der in Richtung eines Doppelpfeils 9 vertikal aufwärts und abwärts bewegt werden kann.

Auf der Oberseite des Tragarms 8 sind ein Motor 10, vorzugsweise ein Elektromotor, und zwei Lagerböcke 11 und 12 montiert, in denen eine mit der Ausgangswelle des Motors 10 verbundene Antriebswelle 13 drehbar gelagert ist. An dem aus dem Lagerbock 12 herausragenden Ende der Antriebswelle 13 ist eine kreisrunde Scheibe 14 koaxial befestigt, die einen außermittig angeordneten Zapfen 15 aufweist, der drehbar in einem Ende einer Pleuelstange 16 gelagert ist. Das andere Ende der Pleuelstange 16 ist mittels eines Lagerzapfens 17 schwenkbar zwischen den beiden Seitenwangen eines U-förmigen Kupplungsorgans 18 gelagert, dessen Quersteg am einen stirnseitigen Ende einer Stange 19 befestigt ist. Diese ist mit Gleitsitz in zwei weiteren, an der vorderen Stirnfläche des Tragarms 8 befestigten Lagerböcken 20 derart gelagert, daß sie senkrecht zur Antriebswelle 13 und zur Arbeitsplatte 2 aufwärts und abwärts bewegt werden kann. Die Auf- und Abbewegung der Stange 19 erfolgt mittels der aus dem Motor 10, der Antriebswelle 13, der Scheibe 14, dem Zapfen 15 und der Pleuelstange 16 gebildeten Antriebseinrichtung, wobei die Hublänge der Auf- und Abwärtsbewegung durch den radialen Abstand des Zapfens 15 vom Mittelpunkt der Scheibe 14 abhängt und konstant ist. Am anderen, unteren Ende der Stange 19 ist eine Einspannvorrichtung 21 angebracht, bei der es sich um irgendeine bekannte Schnellspann-Vorrichtung herkömmlicher Werkzeugmaschinen oder auch lediglich um eine vertikale Bohrung handeln kann, in der sich der Schaft eines Werkzeugs mittels einer Schraube od. dgl. befestigen läßt.

Der gesamte aus Antriebseinrichtung und Einspannvorrichtung 21 bestehende und am Tragarm 8 montierte Teil der Vorrichtung kann mittels eines Einstellmechanismus in Richtung des Doppelpfeils 9 vertikal über der Arbeitsplatte 2 auf- und abbewegt werden. Der Einstellmechanismus enthält eine Gewindespindel 23, die drehbar und senkrecht zur Arbeitsplatte 2 im Ständer 5 gelagert ist und an einem aus dem Ständer 5 herausragenden Ende ein Rad 24 mit einem Handgriff 25 aufweist. Die Gewindespindel 23 durchragt eine mit ihr koaxiale und mit einem entsprechenden Innengewinde versehene Bohrung, die in einer Verlängerung 26 des Führungskörpers 7 ausgebildet ist. Die Verlängerung 26 ist in einem Hohlraum des Ständers 5 angeordnet. Durch Drehen des Rades 24 und damit auch der Gewindespindel 23 in Richtung eines Doppelpfeils 27 wird somit die Verlängerung 26 und mit ihr der Tragarm 8 angehoben bzw. abgesenkt, wobei der Führungskörper 7 in der Führung 6 gleitend geführt wird.

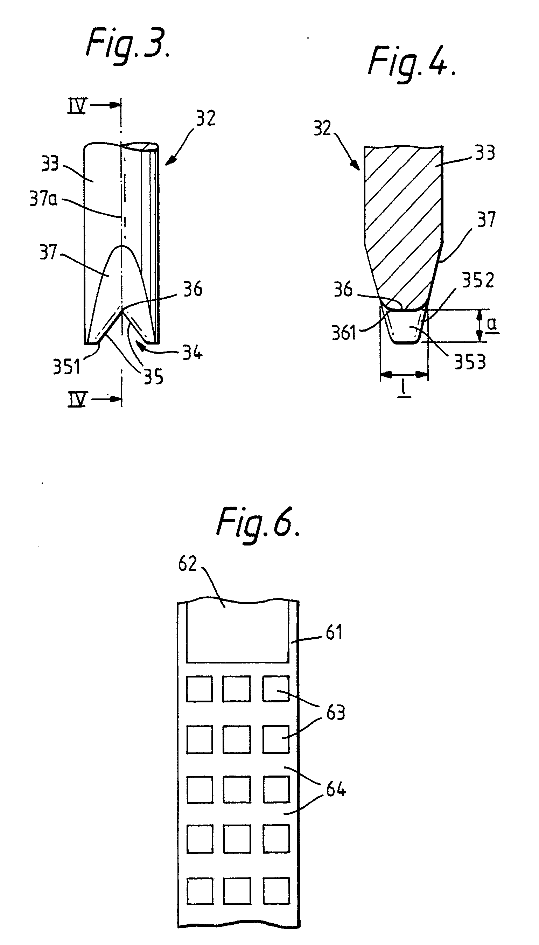

Die Einspannvorrichtung dient zur Einspannung eines erfindungsgemäßen Hämmer-Werkzeugs 32, das schematisch und in starker Vergrößerung in Fig. 3 und 4 dargestellt ist. Das Hämmer-Werkzeug 32 enthält einen Schaft 33, der mit seinem einen Ende in der Einspannvorrichtung 21 eingespannt wird und an seinem anderen Ende eine dachförmige Kerbe 34 ist mit V-förmigem Querschnitt aufweist. Die offene Seite der Kerbe 34 nach dem Einspannen des Hämmer-Werkzeugs 32 der Arbeitsplatte 2 zugewandt. Die Kerbe 34 wird durch zwei beispielsweise ebene, dachförmig zusammenlaufende Seitenflächen 35 gebildet, die längs einer Firstlinie 36 aneinandergrenzen, welche senkrecht zur Schaftachse angeordnet ist. An ihrem unteren Ende können die Seitenflächen 35 leicht verrundet sein (351 in Fig. 3). Die Firstlinie 36 darf je nach Herstellungsart des Werkzeugs auch einen kleinen Radium von wenigen hundertstel Millimeter aufweisen. Die Firstlinie 36 ist vorzugsweise nur in ihrem mittleren Bereich gerade, an ihren Enden dagegen leicht nach oben verrundet (361 in Fig. 4), um scharfe Abbildungen ihrer Enden in den Graten zu vermeiden. Aus demselben Grund sind die Seitenflächen 35 vorzugsweise an ihren äußeren Begrenzungen zwischen ihren unteren, abgerundeten Bereichen und den Übergangsbereichen zum Schaft 33 leicht nach außen verrundet (352 in Fig. 4), so daß sie nur noch in ihrem Mittelbereich (353 in Fig. 4) eben sind. Dabei setzt der spezielle Anwendungszweck des Hämmer-Werkzeugs eine solche Feinbearbeitung voraus, daß die Krümmungsradien der Abrundungen von einigen zehntel Millimeter herab bis zu einigen hundertstel Millimeter betragen. Durch Ausbildung von Aussparungen 37 in den an die Kerbe 34 grenzenden Schaftabschnitten kann der Kerbe 34 wahlweise jede beliebige Länge zwischen einer sehr kleinen Länge und einer dem Durchmesser des Schaftes 33 entsprechenden Länge gegeben werden. Im übrigen bestehen zumindest die Seitenflächen 35 aus einem ausreichend harten Material, z.B. einem gehärteten Stahl, einem Sintermaterial oder einem verschleißfesten Hartmetall. Der im Bereich der Firstlinie 36 von den Seitenflächen 35 gebildete Winkel beträgt beispielsweise etwa 60 bis 90°, hängt jedoch weitgehend von dem Umständen des Einzelfalls ab und ist daher experimentell zu ermitteln. Die Höhe der Kerbe 34 (Maß a in Fig. 4) kann etwa 0,25 Millimeter betragen, während die Länge der Kerbe 34 (Maß l in Fig. 4) etwa 0,5 oder weniger Millimeter beträgt.

In Fig. 3 und 4 ist eine aus einem Stück hergestelltes Hämmer-Werkzeug 32 dargestellt. In diesem Fall wird die Firstlinie 36, bedingt durch die Herstellungstechnik, einem kleinen Radius von wenigen hundertstel Millimeter aufweisen. Alternativ kann auch ein mehrteiliges, insbesondere zweiteiliges Hämmer-Werkzeug 32 vorgesehen werden, das beispielsweise längs seiner Mittelebene 37a (Fig. 3) geteilt ist, so daß die Firstlinie 36 durch zwei aneinandergrenzende Teile gebildet wird und daher scharfkantig sein kann. Auch andere Teilungen sind denkbar, beispielsweise in Ebenen, die eine der beiden Seitenflächen 35 einschließen. Die einzelnen Teile des Hämmer-Werkzeugs werden miteinander verklebt, verlötet, verschweißt, verklemmt oder in sonstiger Weise verbunden.

Die erfindungsgemäße Vorrichtung arbeitet wie folgt:

Es wird zunächst ein Stanzkörper 3 mit seiner ebenen Auflagefläche auf die ebenfalls ebene Arbeitsplatte 2 aufgelegt, wobei der Stanzkörper 3 bereits durch einen Ätz-, Fräs-, Erodierungsvorgang od. dgl. mit einem Grat 4 versehen ist, der erhaben vom Stanzkörper 3 nach oben absteht. Die obere Oberfläche 38 des Grates ist relativ breit und als Schneidkante nicht geeignet. Mit Hilfe des Einstellmechanismus wird nun der Tragarm 8 nach unten bewegt, bis der Grat 4 an irgendeiner Stelle innerhalb der Kerbe 34 und zwischen deren Seitenflächen 35 zu liegen kommt. Das Hämmer-Werkzeug befindet sich dabei vorzugsweise in seiner oberen Totpunktstellung, damit es gleichzeitig so justiert werden kann, daß der nachfolgende Hämmervorgang zu der erwünschten Grathöhe führt. Darauf wird der Motor 10 eingeschaltet, so daß die Antriebswelle 13 in Richtung eines Pfeils 39 in Umdrehungen versetzt wird und dadurch die Stange 19, die Einspannvorrichtung 21 und das Hämmer-Werkzeug 32 in Richtung eines Doppelpfeils 40 auf- und abbewegt werden. Die Drehzahl der Antriebswelle 13 kann dabei beispielsweise 20 000 U.p.M. betragen. Dadurch wird der Grat an seiner Oberfläche 38 einem Hämmervorgang unterworfen, der dazu führt, daß die Oberfläche 38 allmählich in eine scharfe Schneidkante 41 (Fig. 1) umgewandelt wird, die im Bereich der Schneide im wesentlichen diejenige Form annimmt, welche das Hämmer-Werkzeug 32 im Bereich der Firstlinie 36 besitzt.

Der Stanzkörper 3 wird nun manuell in Richtung eines Pfeils 42 (Fig. 1) vorgeschoben, wobei die Schieberichtung immer ziemlich genau parallel zur Achse des Grates 4 sein sollte. Da außerdem die Firstlinie 36 des Hämmer-Werkzeugs 32 stets genau auf die Mitte des Grates 4 bzw. seiner Oberfläche 38 ausgerichtet sein sollte, wird die Hublänge des Hämmer-Werkzeugs 32 vorzugsweise kleiner gewählt, als der Höhe a (Fig. 4)) der Kerbe 34 entspricht. Dadurch ist sichergestellt, daß der Grat 4 auch während des Hämmervorgangs stets seitlich von den Seitenflächen 35 überdeckt und dadurch geführt wird, so daß eine gewisse Eigen- bzw. Selbstzentrierung eintritt und der Stanzkörper 3 tatsächlich nur - der Achse seines Grates 4 folgend -vorgeschoben werden braucht.

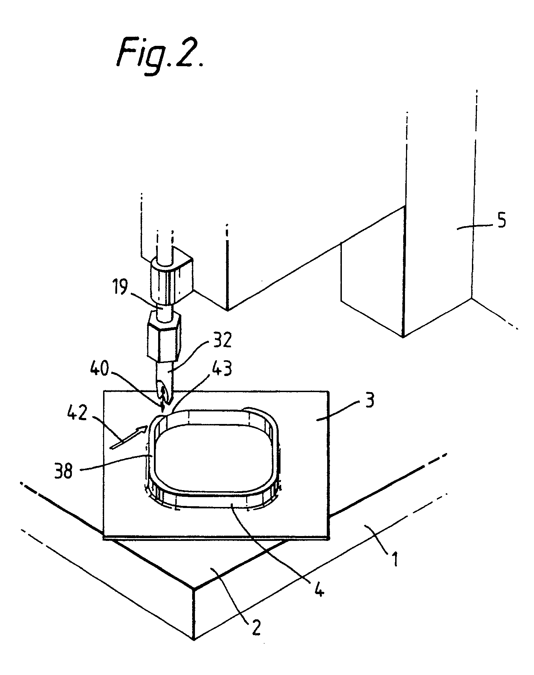

Im Bereich eines kurvenförmigen Abschnitts des Grates 4 (Fig. 2) ist der Stanzkörper 3 entsprechend zu drehen, so daß der Pfeil 42 bzw. die Vorschubrichtung immer in der Richtung der Tangente an den Grat 4 liegt und eine entsprechend kurvenförmige Schneidkante 43 entsteht. Auch bei kurvenförmigen Abschnitten tritt die beschriebene Selbstzentrierung ein, wobei die Radien der kurvenförmigen Abschnitte der Grate 4 um so kleiner sein können, je kürzer die Kerbe 34, d.h. je kleiner das Maß l (Fig. 4) ist.

Alternativ wäre es möglich, den Tragarm 8 parallel zur Arbeitsplatte 2 verschiebbar und/oder das Hämmer-Werkzeug 32 und seine Längsachse drehbar zu lagern, um die zur Bearbeitung des Grates 4 erforderlichen Relativbewegungen zwischen dem Stanzkörper 3 und dem Hämmer-Werkzeug 32 durchzuführen.

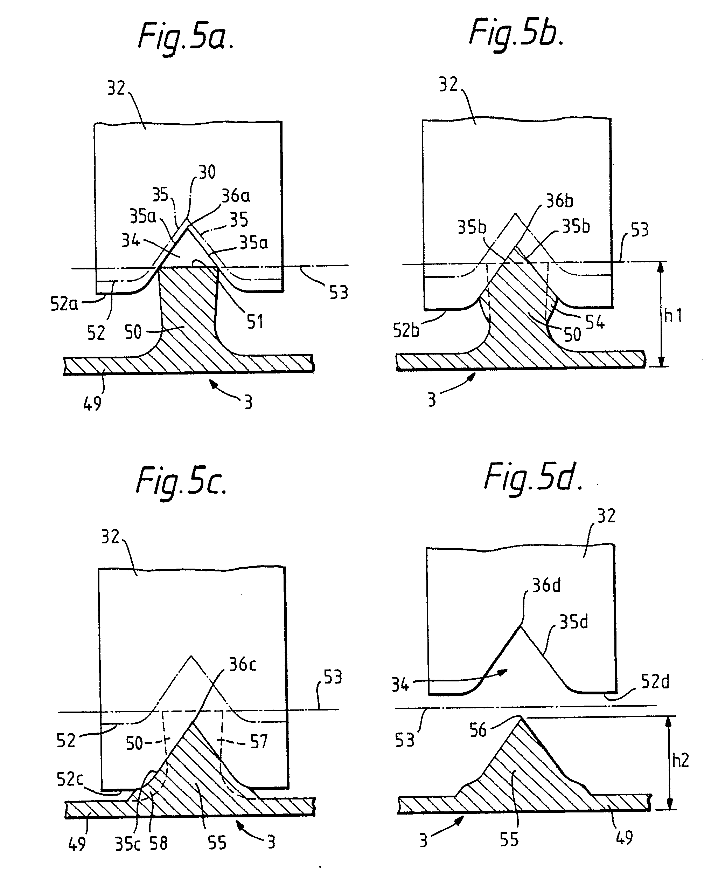

Einzelheiten des Hämmervorgangs sind in Fig. 5a bis 5d in starker Vergrößerung und schematisch dargestellt. Fig. 5a zeigt einen Abschnitt eines Stanzkörpers 3 in Form eines ursprünglich z.B. 0,44 bis 0,46 mm starken, flexiblen Blechs, auf dessen Oberseite ein Grat 50 ausgebildet ist, der vor dem Ätzvorgang mit einer fotoresistiven Schicht belegt wurde, während des Ätzvorgangs stehen bleibt und daher eine vergleichsweise breite obere Oberfläche 51 aufweist. Die dem Grat 50 benachbarten Abschnitte des Stanzkörpers 3 sind durch den Ätzvorgang beseitigt worden, so daß der Stanzkörper 3 zwischen den Graten 50 nur noch aus dünnen Blechstreifen 49 von z.B. 0,12 mm Stärke besteht. Über dem Grat 50 ist das Hämmer-Werkzeug 32 angeordnet, in dessen Unterkante die Kerbe 34 ausgebildet ist, deren Höhe a (Fig. 4) etwa 0,2 bis 0,25 mm beträgt, damit sich das Hämmer-Werkzeug 32 nicht auf die obere Oberfläche der Blechstreifen 49 auflegen kann. In Fig. 5a, 5b und 5c ist die Unterkante des Hämmer-Werkzeugs 32 jeweils mit einer strichpunktierten Linie 52 dargestellt, welche die Lage angibt, welche die Unterkante im oberen Totpunkt des Hämmer-Werkzeugs 32 einnehmen würde. Dagegen kennzeichnen die in Fig. 5a bis 5d jeweils durchgezogenen Linien 52a bis 52d die jeweilige Ist-Position der Unterkante des Hämmer-Werkzeugs 32. Entsprechend sind die Teile 35,36 in den verschiedenen Positionen zusätzlich mit den Buchstaben a bis d versehen. Eine Linie 53 definiert die Höhe h1 des Grates 50 nach dem Ätzvorgang, bezogen auf die ebene Unterkante des Stanzkörpers 3. Diese Höhe h1 ist, über die Länge des gesamten Grates 50 betrachtet, unzulässigen Schwankungen von einigen Hundertstel Millimeter unterworfen, was z.B. auf die üblichen Toleranzen beim Herstellen von Blechen zurückzuführen ist.

Aus Fig. 5a ist ersichtlich, daß das Hämmer-Werkzeug 32 von seinem oberen Totpunkt aus so weit abgesenkt worden ist, daß die Seitenflächen 35a seiner Kerbe 34 gerade die Eckpunkte des Grates 50 berühren, so daß noch keine Verformung eingetreten ist. Außerdem ist ersichtlich, daß der obere Totpunkt (Linie 52) so hoch gewählt ist, daß bei seinem Erreichen der Grat 50 zwar freiliegt und infolgedessen der Stanzkörper 3 vorgeschoben werden kann, die beiden Seitenflächen 35 aber noch beidseitig den Grat 50 überdecken, so daß dieser auch in der oberen Totpunktstellung des Hämmer-Werkzeugs 32 nicht nach der Seite, d.h. in Fig. 5a nach rechts oder links, völlig aus der Kerbe 34 herausbewegt werden kann. Bei einem manuellen Vorschub des Stanzkörpers 3 in Richtung des Grates 50 findet daher immer eine Selbstzentrierung statt, wobei der Zentrierfehler maximal dem Freiraum zwischen den Eckpunkten des Grates 50 und den Seitenwänden 35 entspricht.

In der Stellung nach Fig. 5b ist das Hämmer-Werkzeug 32 weiter abgesenkt worden. Dadurch hat sich die ursprünglich relativ breite Oberfläche 51 des Grates 50 in kalten Zustand bereits teilweise oder ganz zu einer scharfen Schneidkante verformt, und auch die oberen Abschnitte der Seitenwände des Grates 50 nahe der Schneidkante liegen bereits eng an der Kontur des Hämmer-Werkzeugs 32 an. Unterhalb der Unterkante 52b des Hämmer-Werkzeugs 32 haben sich herausgedrückte Materialbereiche 54 an den Seitenwänden des Grates 50 gebildet.

Fig. 5c zeigt das Erreichen des unteren Totpunktes des Hämmer-Werkzeugs 32 (Linie 52c). die Unterkante des Hämmer-Werkzeugs 32 steht den oberen Oberflächen der Blechstreifen 49 mit geringem Abstand gegenüber, und das im ursprünglichen Grat 50 enthaltene Material ist nahezu vollständig in die Kerbe 34 geflossen. Der ursprüngliche, in Fig. 5c gestrichelt dargestellte Grat 50 ist in eine Schneidkante 55 mit einer nahezu messerscharfen Spitze 56 (Fig. 5d) umgewandelt worden, deren Höhe h2, gemessen von der Unterkante des Stanzkörpers 3, etwas kleiner als die Höhe h1 des ursprünglichen Grates ist und beispielsweise ca. 0,43 mm beträgt. Die von der Oberseite des Grates 50 abgetragenen Materialschichten 57 (Fig. 5c) sind teilweise oder ganz in die durch den Ätzvorgang etwas unterhöhlten Fußabschnitte des ursprünglichen Grates 50 geflossen und haben dort zu Verbreiterungen 58 geführt, so daß die Schneidkante eine im wesentlichen dreieckförmige Kontur entsprechend der dachförmigen Kerbe 34 besitzt. Nach Beendigung des Schärfens des gesamten Grates 50 wird das Hämmer-Werkzeug 32 mittels des Einstellmechanismus über den oberen Totpunkt nach oben bewegt (Fig. 5d), so daß der Stanzkörper 3 seitlich weggezogen und dann, ggf. nach einem Härtungsprozeß für die Schneidkante 55, als Stanzwerkzeug verwendet werden kann.

Ein besonderer Vorteil des erfindungsgemäßen Verfahrens besteht darin, daß die Höhe h2 der fertigen Schneidkante 55 auf ihrer gesamten Länge allein durch den Abstand des unteren Totpunkts (Fig. 5c) von der Arbeitsplatte 2 abhängt, auf dem der Stanzkörper 3 bei der Bearbeitung aufliegt, und daher eine Konstante der Vorrichtung ist. Es ist lediglich darauf zu achten, daß die Anfangshöhe h1 des Grates 50, die beim Ätzen od. dgl. entsteht, größer als die Höhe h2 ist, die der Soll-Höhe h2 der Schneidkante 55 des fertigen Stanzwerkzeugs 3 entspricht, d.h. weder bei der Herstellung der Stanzkörper 3 noch bei der Herstellung des Grate 50 sind besonders enge Toleranzen zu beachten. Da die Höhe h2 für den späteren Stanzvorgang über die ganze Länge der Schneidkante 55 sehr genau konstant sein sollte, wird der untere Totpunkt vorzugsweise mittels einer Antriebseinrichtung hergestellt, bei welcher die Antriebskraft formschlüssig auf die Einspannvorrichtung 21 bzw. das Hämmer-Werkzeug 32 übertragen wird. Die Zurückbewegung in die obere Totpunktlage kann dagegen auch durch kraftschlüssige Kraftübertragung stattfinden. Dabei kann die Anordnung wahlweise so getroffen werden, daß die Schneidkante 55 in einem einzigen Hämmervorgang ausgebildet wird oder daß zwei oder mehr Bearbeitungen vorgenommen werden, indem beispielsweise der untere Totpunkt des Hämmer-Werkzeugs 32 in aufeinanderfolgend auszuführenden Verfahrensstufen schrittweise tiefer gelegt wird. Alternativ kann allerdings auch die untere Totpunktlage mittels einer kraftschlüssig wirksamen Vorrichtung, z.B. einer piezoelektrischen oder elektromagnetischen Vorrichtung, hergestellt werden, in welchem Fall in der Regel ebenfalls mehrere Hämmervorgänge pro Gratabschnitt benötigt werden, bis die Sollhöhe des Grates erreicht ist.

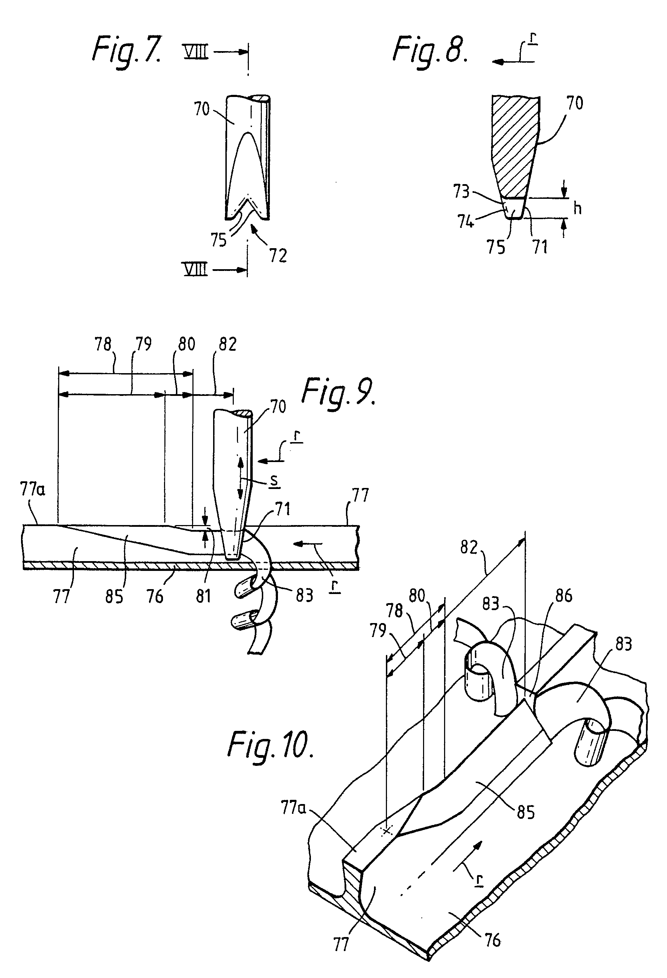

Der in Fig. 1 und 2 dargestellte Stanzkörper 3 dient nach dem Schärfen seiner Grate 4 bzw. nach dem Herstellen der Schneidkanten 41,43 zum Ausstanzen etwa rechteckförmiger Etiketten od. dgl. und weist zu diesem Zweck eine einzige, endlose Schneidkante auf. Bei der Etikettenherstellung ist es jedoch üblich, gleichzeitig eine Vielzahl von nebeneinanderliegenden Etiketten auszustanzen. Fig. 6 zeigt beispielsweise ein Trägerband 61 für selbstklebendes Etikettenpapier 62, aus dem in einem Stanzvorgang beispielsweise zwölf Etiketten 63 ausgestanzt werden. Die zwischen diesen Etiketten 63 dargestellten Zwischenräume 64 bilden ein zusammenhängendes Gitter, das Abfall darstellt und vor der Weiterverwendung der Etiketten 63 vom Trägerband 61 abgezogen wird. Jedes einzelne Etikett 63 wird mittels einer endlos umlaufenden Schneidkante 41,43 entsprechend Fig. 1 und 2 ausgeschnitten.

Die Erfindung ist nicht auf das beschriebene bevorzugte Ausführungsbeispiel beschränkt, das auf vielfache Weise abgewandelt werden kann. Anstelle des dargestellten Kurbel- bzw. Exzenterantriebs für das Hämmer-Werkzeug 32 können andere Antriebe vorgesehen werden, und auch die Änderung der Höhenlage des Tragarms 8 kann mit anderen als den dargestellten Mitteln erfolgen. Weiterhin ist die Erfindung nicht auf die Anwendung von Stanzkörpern mit ebener Unterseite beschränkt. Stattdessen können auch zylindrische oder auf zylindrische Arbeitsplatten aufgespannte Stanzkörper vorgesehen sein. In diesem Falle lassen sich zum Zylinderumfang parallele Grate durch Drehung des Zylinders bzw. der zylindrischen Arbeitsplatte am Hämmer-Werkzeug vorbeitransportieren, während bei der Bearbeitung von zur Zylinderachse parallelen Graten entweder der Zylinder bzw. die zylindrische Arbeitsplatte oder das Hämmer-Werkzeug parallel zur Zylinderachse beweglich angeordnet sein müßte. Denkbar wäre für diesen Fall beispielsweise, den Ständer 5 der Vorrichtung verschiebbar auf dem Arbeitstisch 1 zu montieren und diesen mit einer drehbaren zylindrischen Arbeitsplatte bzw. einer Aufnahme zur drehbaren Lagerung eines zylindrischen Stanzkörpers zu versehen. Außerdem könnte der Einstellmechanismus nicht dem Tragarm 8, sondern der Arbeitsplatte 2 zugeordnet sein.

Weiterhin ist die Erfindung nicht auf die angegebenen Dimensionen und sonstigen Parameter beschränkt, die nur beispielsweise angegeben sind und eine praktische Ausführungsform betreffen. Die im Einzelfall zu wählenden Dimensionen und Parameter hängen stark von der Art oder der Größe der zu stanzenden Gegenstände ab.

Weiterhin kann es vorkommen, daß die Stanzkörper Grate mit sich kreuzenden Teilen aufweisen. Bei der Bearbeitung solcher Grate ist das Hämmer-Werkzeug im Bereich der Kreuzungen vom Stanzkörper abzuheben und die Feinbearbeitung der Kreuzungen wie bisher manuell z.B. mit Schabern, Gravierstichel od. dgl. vorzunehmen.

Weiterhin kann die Erfindung sowohl auf Stanzkörper aus gehärtetem Material, z.B. Stahl, als auch auf Stanzkörper aus vergleichsweise weichen Materialien angewendet werden, die nach dem Hämmern gehärtet werden.

Schließlich braucht weder die Arbeitsplatte 2 horizontal angeordnet noch das Hämmer-Werkzeug 32 vertikal auf- und abbewegbar sein. Auch andere Anordnungen der Arbeitsplatte 2 und Hin- und Herbewegungen des Hämmer-Werkzeugs 32 sind möglich, insbesondere solche, bei denen die Hin- und Herbewegung des Hämmer-Werkzeugs 32 zwar in Richtung der Arbeitsplatte 2, aber nicht exakt senkrecht zu ihrer Oberfläche erfolgt.

Eine Modifikation des beschriebenen Verfahres kann ferner darin bestehen, daß der Hämmervorgang entsprechend Fig. 7 bis 10 mit einem spanabhebenden Schabvorgang kombiniert wird. Hierzu wird ein Werkzeug 70 vorgesehen, dessen entgegen der Vorschubrichtung des Stanzkörpers 3 (Pfeil r ) zeigende Vorderfläche längs einer scharfkantigen Schneidkante 71 (Fig. 8) in eine V-förmige Kerbe 72 übergeht. Sie sich aus einem Vergleich der Fig. 3,4 einerseits und Fig. 7,8 andererseits ergibt, sind die Werkzeuge 33 und 70 im übrigen im wesentlichen identisch ausgebildet. Das zeigt sich darin, daß auch das Werkzeug 70 im hinteren Bereich eine verrundete Übergangskante 73 aufweist, die in Fig. 7 gestrichelt angedeutet ist und etwa bei der Linie 74 beginnt, aber an der Vorderseite fehlt. Die zum Hämmern dienenden Seitenflächen 75, die die V-förmige Kerbe 72 begrenzen, sind wiederum weitgehend eben.

Fig. 9 und 10 zeigen die Bearbeitung eines Stanzkörpers 76 mit einem Grat 77 durch das Werkzeug 70. Durch entsprechende Steuerung des Tragarms 8 (Fig. 1) wird das Werkzeug 70 zu Beginn des Hämmervorgangs nicht sofort auf seine Sollhöhe eingestellt. Vielmehr wird es während des Vorschubs (Pfeil r ) und seiner Oszillation (Pfeil s ) zunächst innerhalb einer Einführungsstrecke 78 (Fig. 9) allmählich auf dem Grat 77 abgesenkt, so daß dessen Höhe 77a auf einem ersten Teil 79 der Einführungsstrecke 78 noch erhalten bleibt. Erst auf deren letztem Abschnitt 80 wird der Grat 71 durch weiteres Absenken des Werkzeugs 70 auf seine Sollhöhe gebracht, die um das in Fig. 9 mit 81 bezeichnete Maß kleiner als die ursprüngliche Höhe 77a ist und im weiteren Verlauf der Bearbeitung beibehalten wird (Abschnitt 82 in Fig. 9 und 10).

Während des Absenkens des Werkzeugs 70 wird der Grat 77 sowohl durch Hämmern als auch durch spanabhebendes Schaben bearbeitet, indem die an der Vorderseite des Werkzeugs 70 befindliche scharfe Schneidkante 71 an beiden Seiten des Grates 77 Späne 83 (Fig. 9 und 10) abträgt. Dieser Vorgang setzt sich über die ganze Länge des Grates 77 fort. Die dabei verbleibenden, durch kombiniertes Hämmern und Schaben gebildeten Seitenflächen 85 sind in Fig. 10 schraffiert dargestellt. Dabei ist mit dem Pfeil r die Bewegungsrichtung des Stanzkörpers 76 angedeutet. Das Werkzeug 70 ist momentan in einer Position dicht vor der Übergangsstelle 86 zwischen einem bereits bearbeiteten und einem noch unbearbeiteten Teilstück des Grates 77 zu denken.

Die kombinierte Bearbeitung des Grates 77 durch Hämmern und Schaben kann schließlich durch eine Bearbeitung ersetzt werden, die allein durch spanabhebendes Schaben gekennzeichnet ist. Hierzu ist lediglich erforderlich, die durch den Motor 10 (Fig. 1 ) bewirkte oszillierende Bewegung des Werkzeugs 70 auszuschalten und den Stanzkörper 76 in Richtung des Pfeils r zu bewegen. Die Sollhöhe des Werkzeugs 70 kann dabei im Bereich der Strecke 78 ebenfalls allmählich hergestellt werden. Abgesehen davon ist es möglich, bei einem kombinierten Hämmer- und Schabvorgang die Amplitude der oszillierenden Bewegung (Pfeil s ) auf jeden zweckmäßigen Wert einzustellen.

## Ansprüche

1. Verfahren zum Herstellen eines eine scharfe Schneidkante (41,55) aufweisenden Stanzwerkzeugs, insbesondere für Etikettenschneidgeräte, wobei ein Stanzkörper (3) in einem ersten Verfahrensschritt mit einem erhaben vorstehenden Grat (4,50) versehen und dieser Grat in einem zweiten Verfahrensschritt unter Bildung der scharfen Schneidkante (41,55) geschärft wird, dadurch gekennzeichnet, daß das Schärfen des Grates (4,50) durch Hämmern erfolgt.

2. Verfahren nach Anspruch 1, dadurch gekennzeichnet, daß der Stanzkörper (3) im zweiten Verfahrensschritt auf eine Auflage (2) aufgelegt wird und das Schärfen des Grates (4,50) mittels eines an einem Einstellmechanismus montierten Werkzeugs (32,70) derart erfolgt, daß die Höhe (h2) der Schneidkante (41,55) durch die relative Lage des Werkzeugs (32) zur Auflage (2) bestimmt wird.

3. Verfahren nach Anspruch 1 oder 2, dadurch gekennzeichnet, daß das Schärfen des Grates (77) durch kombiniertes Hämmern und Schaben erfolgt.

4. Verfahren zum Herstellen eines eine scharfe Schneidkante (41,55) aufweisenden Stanzwerkzeugs, insbesondere für Etikettenschneidgeräte, wobei ein Stanzkörper (3) in einem ersten Verfahrensschritt mit einem erhaben vorstehenden Grat (4,50) versehen und dieser Grat in einem zweiten Verfahrensschritt unter Bildung der scharfen Schneidkante (41,55) durch Schaben geschärft wird, dadurch gekennzeichnet, daß der Stanzkörper (3) im zweiten Verfahrensschritt auf eine Auflage (2) aufgelegt wird und das Schärfen des Grates (4,50) mittels eines an einem Einstellmechanismus montierten Werkzeugs (32,70) derart erfolgt, daß die Höhe der Schneidkante durch die relative Lage des Werkzeugs (32,70) zur Auflage bestimmt wird.

5. Verfahren nach einem der Ansprüche 1 bis 3, dadurch gekennzeichnet, daß das Hämmern oder das kombinierte Hämmern und Schaben mittels eines V-förmigen, mit konstantem Hub hin- und herbewegbaren Werkzeugs (32,70) mit einer dachförmigen Kerbe (34,72) erfolgt, unter der der Stanzkörper (3,76) - der Achse seines Grates (4,50,77) folgend - vorbeibewegt wird.

6. Verfahren nach Anspruch 5, dadurch gekennzeichnet, daß der Bewegungshub des Werkzeugs (32,70) derart gewählt wird, daß dieses den Grat (4,50,77) in und zwischen zwei Totpunkten des Bewegungshubs ständig überdeckt und dadurch den Stanzkörper (3,76) seitlich führt.

7. Verfahren nach Anspruch 5 oder 6, dadurch gekennzeichnet daß das Werkzeug (32,70) zumindest ·während der Bewegung in Richtung des Stanzkörpers (3,76) formschlüssig angetrieben wird.

8. Verfahren nach wenigstens einem der Ansprüche 1 bis 7, dadurch gekennzeichnet, daß der Stanzkörper (3,76) während des Hämmerns oder Schabens manuell vorgeschoben und beim Auftreten eines Bogens im Grat (4,50,77) entsprechend gedreht wird.

9. Verfahren nach wenigstens einem der Ansprüche 1 bis 8, dadurch gekennzeichnet, daß der Grat (4,50,77) durch Ätzen des Stanzkörpers (3,76) hergestellt wird.

10. Vorrichtung zum Herstellen eines eine scharfe Schneidkante aufweisenden Stanzwerkzeugs, insbesondere für Etikettenschneidgeräte, aus einem mit einem, erhaben vorstehenden Grat (4,50,77) versehenen Stanzkörper (3,76), die eine Auflage (2) für den Stanzkörper (3,76), ein über der Auflage (2) angeordnetes Werkzeug (32,70) mit einer dachförmigen Kerbe (34,72), eine mit dem Werkzeug (32,70) verbundene Antriebseinrichtung (10,13,14.15,16,19) zu dessen selbsttätiger Hin- und Herbewegung in Richtung einer Auflage (2) und einen Einstellmechanismus zur Einstellung der Höhenlage des Werkzeugs (32,70) über der Auflage (2) aufweist.

11. Vorrichtung nach Anspruch 10, dadurch gekennzeichnet, daß die Antriebseinrichtung einen Motor (10) und einen von diesem angetriebenen Kurbeltrieb (14,15,16,17,19) aufweist.

12. Vorrichtung nach Anspruch 10 oder 11, dadurch gekennzeichnet, daß der Einstellmechanismus einen Ständer (5) mit einer seitlichen, in Richtung der Auflage (2) verlaufenden Führung (6) aufweist, in der ein seitlich abstehender, das Werkzeug (32,70) und die Antriebseinrichtung (10 bis 19) tragender Tragarm (8) verschiebbar gelagert ist.

13. Vorrichtung nach Anspruch 12, dadurch gekennzeichnet, daß der Einstellmechanismus elne im Stander (5) drehbar gelagerte und mit einem Handrad (24) versehene Gewindespindel (23) aufweist die eine Gewindebohrung in einer seitlichen, im Ständer (5) hin- und herbewegbar angeordneten Verlängerung (26) des Tragarms (8) durchragt.

14. Vorrichtung nach einem der Ansprüche 10 bis 13, dadurch gekennzeichnet, daß das Werkzeug (32,70) ein Hämmer- und/oder Schabwerkzeug ist

15. Vorrichtung nach einem der Ansprüche 10 bis 14, dadurch gekennzeichnet, daß beim Schärfen eines Grates ausschließlich durch Schaben keine selbsttätige Hin- und Herbewegung des Werkstücks vorgesehen ist.

**Claims**

1. Method for manufacturing a punch having a sharp cutting edge (41, 55), especially for label cutting apparatus, wherein a punch body (3) is provided with a raised projecting fin (4, 50) in a first method step and this fin is sharpened in a second method step to form the sharp cutting edge (41, 55), characterized in that the sharpening of the fin (4, 50) is effected by hammering.

2. Method according to claim 1, characterized in that the punch body (3) is supported on a support surface (2) in the second method step and the sharpening of the fin (4, 50) is so effected by means of a tool (39, 70) mounted on an adjusting mechanism that the height (h2) of the cutting edge (41, 55) is determined by the position of the tool (32) relative to the support surface (2).

3. Method according to claim 1 or 2, characterized in that the sharpening of the fin (77) is effected by combined hammering and scraping.

4. Method for manufacturing a punch having a sharp cutting edge (41, 55), especially for label cutting apparatus, wherein a punch body (3) is provided with a raised projecting fin (4, 50) in a first method step and this fin is sharpened by scraping in a second method step to form the sharp cutting edge (41, 55), characterized in that the punch body (3) is supported on a support surface (2) in the second method step and the sharpening of the fin (4, 50) is so effected by means of a tool (39, 70) mounted on an adjusting mechanism that the height of the cutting edge is determined by the position of the tool (39, 70) relative to the support surface.

5. Method according to one of claims 1 to 3, characterized in that the hammering or the combined hammering and scraping is effected by a V-shaped tool (32, 70) reciprocating with constant stroke, with a peaked notch (34, 72), below which the punch body (3, 76) is moved - following the axis of its fin (4, 50, 77).

6. Method according to claim 5, characterized in that the stroke of movement of the tool (39, 70) is so selected that this constantly overlaps the fin (4, 50, 77) in and between two dead points of the stroke of movement and thereby guides the punch body (3, 76) laterally.

7. Method according to claim 5 or 6, characterized in that the tool (32, 70) is driven positively at least during the movement in the direction of the punch body (3, 76).

8. Method according to one of claims 1 to 7, characterized in that the punch body (3, 76) is manually fed during the hammering or scraping and is correspondingly turned on encountering a curve in the fin (4, 50, 77).

9. Method according to at least one of claims 1 to 8, characterized in that the fin (4, 50, 77) is formed by etching the punch body (3, 76).

10. Device for manufacturing a punch having a sharp cutting edge, especially for label cutting apparatus, from a punch body (3, 76) provided with a raised projecting fin (4, 50, 77), which device comprises a support surface (2) for the punch body (3, 76), a tool (32, 70) with a peaked notch (34, 72) arranged over the support surface (2), a drive device (10, 13, 14, 15, 16, 19) coupled to the tool (32, 70) for its automatic reciprocation in the direction of a support surface (2) and an adjusting mechanism for adjusting the height position of the tool (32, 70) above the support surface (2).

11. Device according to claim 10, characterized in that the drive device comprises a motor (10) and a crank drive (14, 15, 16, 17, 19) driven thereby.

12. Device according to claim 10 or 11, characterized in that the adjusting mechanism comprises a standard (5) with a lateral guide (6) running in the direction of the support surface (2) and in which is slidably mounted a laterally projecting support arm (8) carrying the tool (32, 70) and the drive device (10 to 19).

13. Device according to claim 12, characterized in that the adjusting mechanism comprises a threaded spindle (23) rotatably mounted in the standard (5) and provided with a handwheel (24), which spindle passes through a threaded bore in a lateral projection (26) of the support arm (8) arranged movable to and fro in the standard (5).

14. Device according to one of claims 10 to 13, characterized in that the tool (32, 70) is a hammer and/or scraping tool.

15. Device according to one of claims 10 to 14, characterized in that no automatic reciprocation of the tool is provided when sharpening a fin exclusively by scraping.

## Revendications

1. Procédé de fabrication d'un outil d'estampage à arête coupante vive (41, 55), en particulier pour des appareils à couper des étiquettes, un corps d'estampage (3) étant muni, au cours d'une première opération de base, d'une arête (4, 50) saillante en relief laquelle est aiguisée dans une seconde opération de base avec formation de l'arête coupante vive (41, 55), **caractérisé en ce** que l'aiguisage de l'arête (4, 50) se fait par martelage.

2. Procédé selon la revendication 1, caractérisé en ce que le corps d'estampage (3) est déposé dans la seconde opération de base sur un support (2) et que l'aiguisage de l'arête (4, 50) est effectué au moyen d'un outil (32, 70) monté sur un mécanisme de réglage de telle façon que la hauteur (h2) de l'arête coupante (41, 55) est déterminée par la position relative de l'outil (32) par rapport au support (2).

3. Procédé selon l'une des revendications 1 ou 2, caractérisé en ce que l'aiguisage de l'arête (77) est effectué par une combinaison de martelage et de grattage.

4. Procédé de fabrication d'un outil d'estampage à arête coupante (41, 55) vive, en particulier pour des appareils à couper des étiquettes, un corps d'estampage (3) étant muni, au cours d'une première opération de base, d'une arête (4, 50) saillante en relief laquelle est aiguisée dans une seconde opération de base avec formation de l'arête coupante vive (41, 55), caractérisé en ce que le corps d' estampage (3) est déposé dans la seconde opération de base sur un support (2) et que l'aiguisage de l'arête (4, 50) est effectué au moyen d'un outil (32, 70) monté sur un mécanisme de réglage de telle façon que la hauteur de l'arête coupante est déterminée par la position relative de l'outil (32, 70) par rapport au support.

5. Procédé selon l'une des revendications 1 à 3, caractérisé en ce que le martelage ou la combinaison de martelage et de grattage est réalisé au moyen d'un outil (32, 70) en forme de V pouvant être animé d'un mouvement de va-et-vient à course constante et présentant une encoche (34, 72) en forme de toit, sous lequel le corps d'estampage (3, 76) est déplacé en suivant l'axe de son arête (4, 50, 77).

6. Procédé selon la revendication 5, caractérisé en ce que la course de l'outil (32, 70) est choisie de telle façon que ledit outil recouvre en permanence l'arête (4, 50, 77) en et entre deux points morts de la course et assure ainsi le guidage latéral du corps d'estampage (3, 76).

7. Procédé selon l'une des revendications 5 ou 6, caractérisé en ce que, au moins pendant le mouvement en direction du corps d'estampage (3, 76), l'outil (32, 70) est entraîné à engagement positif.

8. Procédé selon l'une des revendications 1 à 7, caractérisé en ce que le corps d'estampage (3, 76) est avancé manuellement pendant le martelage ou le grattage et tourné en conséquence lors de l'apparition d'un arc dans l'arête (4, 50, 77).

9. Procédé selon l'une des revendications 1 à 8, caractérisé en ce que l'arête (4, 50, 77) est réalisée par gravure du corps d'estampage (3, 76).

10. Dispositif pour la fabrication d'un outil d'estampage muni d'une arête coupante vive, en particulier pour des appareils à couper des étiquettes, comprenant un corps d'estampage (3, 76) muni d'une arête (4, 50, 77) saillante en relief, un support (2) pour le corps d'estampage (3, 76), un outil (32, 70) disposé au-dessus dudit support (2) et présentant une encoche (34, 72) en forme de toit, un dispositif d'entraînement (10, 13, 14, 15, 16, 19) raccordé à l'outil (32, 70) dont il assure le mouvement alternatif automatique en direction d'un support (2), et un mécanisme de réglage pour l'ajustage de la position en hauteur de l'outil (32, 70) au-dessus du support (2).

11. Dispositif selon la revendication 10, caractérisé en ce que le dispositif d'entraînement comprend un moteur (10) et une transmission à bielle (14, 15, 16, 17, 19) entraînée par celui-ci.

12. Dispositif selon l'une des revendications 10 ou 11, caractérisé en ce que le mécanisme de réglage comprend un montant (5) avec un guidage latéral (6) s'étendant dans la direction du support (2) et dans lequel un bras de support (8) dépassant latéralement et portant l'outil (32, 70) ainsi que le dispositif d'entraînement (10 à 19) est monté de manière mobile.

13. Dispositif selon la revendication 12, caractérisé en ce que le mécanisme de réglage comprend une broche filetée (23) montée de manière tournante dans le montant (5) et munie d'un volant à main (24), qui traverse un taraudage ménagé dans un prolongement latéral (26) du bras de support (8) disposé dans le montant (5) de façon à pouvoir être animé d'un mouvement alternatif.

14. Dispositif selon l'une des revendications 10 à 13, caractérisé en ce que l'outil (32, 70) est un outil de martelage et/ou de grattage.

**15.** Dispositif selon l'une des revendications 10 à 14, caractérisé en ce qu'un mouvement alternatif automatique de la pièce à usiner n'est pas prévu lorsque l'aiguisage d'une arête se fait uniquement par grattage.

EP 0 321 590 B1

Fig.1.

12

## Fig.2.

# Fig.3.

# Fig.4.

# Fig.6.

## Fig.5a.

## Fig.5b.

## Fig.5c.

## Fig.5d.

Fig.7.

Fig.8.

Fig.9.

Fig.10.